(19)

Europäisches Patentamt
European Patent Office
Office européen des brevets

(11) **EP 2 091 803 B1**

(12) **EUROPÄISCHE PATENTSCHRIFT**

(45) Veröffentlichungstag und Bekanntmachung des Hinweises auf die Patenterteilung:
**24.03.2010 Patentblatt 2010/12**

(21) Anmeldenummer: **07856828.4**

(22) Anmeldetag: **18.12.2007**

(51) Int Cl.:
**B62D 15/02** *(2006.01)* **B60W 30/06** *(2006.01)*

(86) Internationale Anmeldenummer:
**PCT/EP2007/011096**

(87) Internationale Veröffentlichungsnummer:
**WO 2008/074458 (26.06.2008 Gazette 2008/26)**

(54) **VERFAHREN ZUM RÜCKWÄRTIGEN EINPARKEN EINES FAHRZEUGS UND EINPARKHILFESYSTEM HIERFÜR**

METHOD FOR REVERSE-PARKING A VEHICLE, AND PARKING ASSISTANCE SYSTEM FOR THIS PURPOSE

PROCÉDÉ POUR GARER UN VÉHICULE EN MARCHE ARRIÈRE, ET SYSTÈME D'AIDE AU STATIONNEMENT À CET EFFET

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **19.12.2006 DE 102006062390**

(43) Veröffentlichungstag der Anmeldung:
**26.08.2009 Patentblatt 2009/35**

(73) Patentinhaber: **Valeo Schalter und Sensoren GmbH**
**74321 Bietigheim-Bissingen (DE)**

(72) Erfinder:
• **VOVKUSHEVSKY, Vsevolod**
**74321 Bietigheim-Bissingen (DE)**
• **JECKER, Nicolas**
**73728 Esslingen (DE)**

(56) Entgegenhaltungen:
**EP-A- 1 170 171          WO-A-2004/050458**
**WO-A-2005/085043      WO-A-2006/069976**

EP 2 091 803 B1

**Beschreibung**

Die Erfindung betrifft ein Verfahren zum rückwärtigen Einparken eines Fahrzeugs in eine sich parallel zur Fahrbahn erstreckende Parklücke entlang einer Soll-Park-Bahn, wobei die Soll-Park-Bahn wenigstens ein eine Kurve beschreibendes Hauptsegment aufweist.

Die Erfindung betrifft außerdem ein Einparkhilfesystem zur Durchführung eines derartigen Verfahrens.

Aus der EP 1 170 171 A2 ist ein Einparkhilfesystem bekannt geworden, bei dem eine aus Kreissegmenten gebildete Soll-Park-Bahn zum Einparken des Fahrzeugs berechnet wird. Bei einem solchen Einparkhilfesystem schert das Fahrzeug vergleichsweise weit aus. Zudem erscheint der Einparkvorgang nicht flüssig entlang einer Ideallinie, sondern eher eckig und optisch unschön.

Aus der WO 2004/050458 A1 ist ein Verfahren zum Lenken eines rückwärts in eine Parklücke einzuparkenden Fahrzeugs bekannt geworden, bei dem eine Soll-Park-Bahn Klothoidenabschnitte vorsieht. Die Berechnung derartiger Klothoidenabschnitte ist vergleichsweise aufwändig und benötigt entsprechend Rechnerkapazität.

Der vorliegenden Erfindung liegt die Aufgabe zugrunde, ein eingangs erwähntes Verfahren bereitzustellen, bei dem die Soll-Park-Bahn möglichst entlang einer Ideallinie berechnet wird, wobei diese Ideallinie zum einen mit wenig Rechnerressourcen berechnet werden kann und zum anderen zu einem harmonischen Einparkablauf führen soll.

Diese Aufgabe wird durch ein Verfahren mit den Merkmalen des Anspruchs 1 gelöst. Ein solches Verfahren zeichnet sich dadurch aus, dass das Hauptsegment von einer durch einen Startpunkt, einen Endpunkt und zwei Kontrollpunkten oder anstelle der beiden Kontrollpunkte von zwei Kontrollvektoren, definierten kubischen Bezierkurve gebildet wird, wobei die Kontrollpunkte oder -vektoren derart gewählt sind, dass eine Kollision des Fahrzeugs mit die Parklücke begrenzenden Hindernissen nicht stattfindet und ein durch einen maximalen Lenkeinschlag vorgegebener Bahnradius nicht unterschritten und/oder eine maximal zulässige Fahrzeugschrägstellung bezüglich der Parklückenlängsachse nicht überschritten wird.

Ein derartiges Verfahren hat den Vorteil, dass die Soll-Park-Bahn auf einfache Art und Weise berechnet werden kann, wobei ein Einparken entlang einer Bezierkurve ein harmonisches Einparkbild ergibt und zur Berechnung der Soll-Park-Bahn vergleichsweise wenig Rechenressourcen zur Verfügung gestellt werden müssen. Die Auflösung der Bezierkurve, das heißt die Anzahl der Stützpunkte, die die Bezierkurve definiert, kann dabei an die vorhandenen Rechenressourcen angepasst werden.

Die Soll-Park-Bahn kann insbesondere für den Mittelpunkt einer nicht lenkbaren Achse des Fahrzeugs berechnet werden. Idealerweise bewegt sich dann der Mittelpunkt dieser Fahrzeugachse entlang der Soll-Park-Bahn beim Einparkvorgang in die Parklücke.

Je nach Ausgangslage des Fahrzeugs kann die Soll-Park-Bahn lediglich vom Hauptsegment gebildet sein. Sollte allerdings unter Berücksichtigung der genannten Bedingungen eine Bezierkurve vom Startpunkt zum Endpunkt nicht gebildet werden können, so kann vorgesehen sein, dass sich an das Hauptsegment ein geradliniges Auslaufsegment tangential anschließt. Insbesondere bei entsprechend lang ausgebildeten Parklücken kann damit zur Erreichung einer mittigen Endlage des Fahrzeugs ein derartiges Auslaufsegment vorgesehen sein, das insbesondere parallel zur Längsachse der Parklücke verläuft. Auch ein Nachlaufen des Lenksystems kann damit ausgeglichen werden.

Ferner ist denkbar, dass zur Erreichung des Startpunkts des Hauptsegments ein dem Hauptsegment vorgelagertes Eingangssegment vorgesehen ist, an das sich das Hauptsegment tangential anschließt. Über ein derartiges Eingangssegment kann folglich ein optimaler Startpunkt des Hauptsegments erreicht werden.

Das Eingangssegment kann dabei einen geradlinigen, insbesondere schräg oder parallel zur Mittellängsachse der Parklücke verlaufenden Verlauf aufweisen oder von einer durch einen Startpunkt, einen Endpunkt, welcher identisch zu dem Startpunkt des Hauptsegments ist, und zwei Kontrollpunkten definierten kubischen Bezierkurve gebildet sein. Für einen optimalen Einparkvorgang kann folglich der Fall auftreten, dass zwei Bezierkurven unmittelbar aneinander angrenzen, zum einen die das Eingangssegment bildenden Bezierkurve und zum anderen die das Hauptsegment bildende Bezierkurve. Die beiden Bezierkurven gehen dabei tangential ineinander über, woraus sich ein harmonisch und optisch ansprechender Einparkablauf ergibt.

Bei einer weiteren Ausführungsform der Erfindung ist vorgesehen, dass das Hauptsegment und/oder das Eingangssegment, falls dieses ebenfalls von einer Bezierkurve gebildet wird, in jeweils $n$ Untersegmente aufgeteilt wird, wobei die Bezierkurve bildende Kurvenstützpunkte wie folgt berechnet werden:

$$x_i = x_{start}\left(1-\frac{i}{N}\right)^3 + 3x_{kp1}\frac{i}{N}\left(1-\frac{i}{N}\right)^2 + 3x_{kp2}\left(\frac{i}{N}\right)^2\left(1-\frac{i}{N}\right) + x_{end}\left(\frac{i}{N}\right)^3 \qquad (1)$$

$$y_i = y_{start}\left(1-\frac{i}{N}\right)^3 + 3y_{kp1}\frac{i}{N}\left(1-\frac{i}{N}\right)^2 + 3y_{kp2}\left(\frac{i}{N}\right)^2\left(1-\frac{i}{N}\right) + y_{end}\left(\frac{i}{N}\right)^3 \qquad (2),$$

mit:

$x_{start}, y_{start}$ :, x- und y-Wert des Startpunkts,
$x_{kp1}, y_{kp1}$: x- und y-Wert des ersten Kontrollpunkts,
$x_{kp2}, y_{kp2}$: x- und y-Wert des zweiten Kontrollpunkts,
$x_{end}, y_{end}$: x- und y-Wert des Endpunkts,
$n$: Anzahl der Untersegmente,
$i$: Nummer des Stützpunktes, und
$N=(n+1)$ : Anzahl der Kurvenstützpunkte.

Je nach gewünschter Auflösung der Bezierkurve kann die Anzahl der Kurvenstützpunkte vorgegeben werden. Vorteilhafterweise kann der Wert der Kurvenstützpunkte N im Bereich von 100 bis 1.000 liegen. Zwischen den jeweiligen Kurvenstützpunkten kann insbesondere linear interpoliert werden. Hierdurch kann eine geeignete Bezierkurve mit vergleichsweise wenig Rechenaufwand bereitgestellt werden.

Sollte es nicht möglich sein, ohne Korrektur, das heißt ohne Fahrtrichtungswechsel, mit einem Einparkzug in die Parklücke zu gelangen, so kann vorgesehen sein, dass sich an einen ersten Einparkzug, dessen Bestandteil das von der Bezierkurve gebildete Hauptsegment ist, sich ein weiterer, in entgegengesetzter Fahrtrichtung des Fahrzeugs gerichteter Einparkzug anschließt, wobei dieser weitere Einparkzug ein eigenes, von einer kubischen Bezierkurve gebildetes Hauptsegment aufweist, dessen Startpunkt vom Endpunkt des ersten Einparkzuges gebildet wird. Das Hauptsegment des weiteren Einparkzuges wird dabei definiert durch dessen Startpunkt, dessen Endpunkt und durch zwei zugehörige Kontrollpunkte beziehungsweise Kontrollvektoren. Eine erfindungsgemäße Soll-Park-Bahn kann folglich mehrere Züge umfassen, welche gegebenenfalls jeweils ein von einer kubischen Bezierkurve gebildetes Hauptsegment aufweisen. Insgesamt ergibt sich hierdurch ein optisch ansprechender Einparkvorgang.

Die eingangs genannte Aufgabe wird auch gelöst durch ein Einparkhilfesystem zum rückwärtigen Einparken eines Fahrzeugs in eine sich parallel zur Fahrbahn erstreckenden Parklücke entlang einer Soll-Park-Bahn, mit Sensoren zum Erfassen der Länge der Parklücke und mit einer Auswerteeinheit zum Berechnen der Soll-Park-Bahn gemäß dem erfindungsgemäßen Verfahren. Die Sensoren zur Erfassung der Parklücke können insbesondere Ultraschallsensoren sein, die beim Passieren der Parklücke dessen Länge und gegebenenfalls auch dessen Tiefe ermitteln. Nach dem Passieren der Parklücke kann dann, falls die Parklücke als ausreichend groß identifiziert wurde, eine geeignete Soll-Park-Bahn mit einem von einer Bezierkurve gebildeten Hauptsegment berechnet werden. Das Einparkhilfesystem kann zudem so ausgebildet sein, dass eine Lenkbewegung des Lenkrades beziehungsweise der lenkbaren Räder, derart automatisch erfolgt, dass entlang der Soll-Park-Bahn das Fahrzeug in die Parklücke eingeparkt wird.

Der nachfolgenden Beschreibung sind weitere Einzelheiten und vorteilhafte Ausgestaltungen der Erfindung zu entnehmen, die anhand der in den Figuren beschriebenen Ausführungsbeispiele der Erfindung näher beschrieben und erläutert sind.

Es zeigen:

Figur 1     eine kubische Bezierkurve,

Figur 2     drei verschiedene Soll-Park-Bahnen mit jeweils drei Segmenten,

Figur 3     eine Soll-Park-Bahn mit zwei Einparkzügen,

Figur 4     ein Modell zur Ermittlung der Soll-Park-Bahn,

Figuren 5 bis 8    verschiedene Einparksituationen unter Verwendung verschiedener Soll-Park-Bahnen.

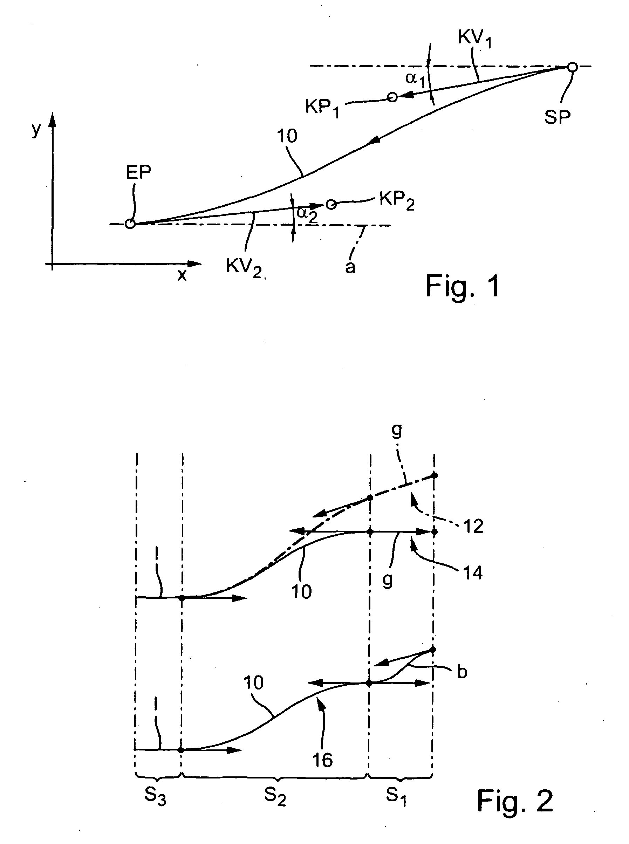

In der Figur 1 ist in einem Koordinatensystem mit einer x- und einer y-Achse beispielhaft eine kubische Bezierkurve dargestellt, die ein Hauptsegment 10 einer Soll-Park-Bahn aufweist, entlang derer ein Fahrzeug rückwärtig in eine parallel zur Fahrbahn vorhandene Parklücke eingeparkt werden kann. Dieses Hauptsegment ist definiert durch den Startpunkt SP ($x_{start}$, $y_{start}$) , den Endpunkt EP ($x_{end}$, $y_{end}$) und durch die beiden Kontrollpunkte KP1 ($x_{KP1}$, $y_{KP2}$) und KP2 ($x_{KP2}$, $y_{KP2}$). Vom Startpunkt SP zum Kontrollpunkt KP2 erstreckt sich der Kontrollvektor KV1; vom Endpunkt EP zum Kontrollpunkt KP1 erstreckt sich der Kontrollvektor KV1. Der Kontrollvektor KV1 schließt dabei mit der Mittellängsachse a der Parklücke, beziehungsweise der Fahrbahn, einen Winkel $\alpha_2$ ein; der Kontrollvektor KV1 einen Winkel $\alpha_1$.

Der Verlauf des Hauptsegments 10 kann dabei über folgende Formeln berechnet werden:

$$x_i = x_{start}\left(1 - \frac{i}{N}\right)^3 + 3x_{kp1}\frac{i}{N}\left(1 - \frac{i}{N}\right)^2 + 3x_{kp2}\left(\frac{i}{N}\right)^2\left(1 - \frac{i}{N}\right) + x_{end}\left(\frac{i}{N}\right)^3 \quad (1)$$

$$y_i = y_{start}\left(1 - \frac{i}{N}\right)^3 + 3y_{kp1}\frac{i}{N}\left(1 - \frac{i}{N}\right)^2 + 3y_{kp2}\left(\frac{i}{N}\right)^2\left(1 - \frac{i}{N}\right) + y_{end}\left(\frac{i}{N}\right)^3 \quad (2),$$

wobei gilt:

$n$: Anzahl der Untersegmente,

$i$: Nummer des Stützpunktes.

Das Hauptsegment wird dabei vorteilhafterweise in $n$ Untersegmente aufgeteilt, wobei ein Untersegment jeweils zwischen zwei Kurvenstützpunkten liegt. Je nach der gewünschten Auflösung des Hauptsegments 10 können insbesondere zwischen 100 und 1.000 Kurvenstützpunkte vorgesehen sein, wobei zwischen den jeweiligen Kurvenstützpunkten vorteilhafterweise linear interpoliert wird.

Je nach Einparksituation kann die Soll-Park-Bahn mehrere Segmente, insbesondere drei Segmente, wie sie in Figur 2 mit S1, S2 und S3 bezeichnet sind, aufweisen. Es kann ein optionales Eingangssegment S1 vorgesehen sein, das entweder von einer Geraden g oder von einer eigenen kubischen Bezierkurve b gebildet sein kann. An dieses Eingangssegment S1 schließt sich dann das Hauptsegment S2 an, das von einer Bezierkurve 10, wie sie in Figur 1 dargestellt ist, gebildet wird. An das Hauptsegment S2 kann sich dann, je nach Größe der Parklücke, ein Auslaufsegment 1 anschließen, das insbesondere parallel zur Längsachse der Parklücke beziehungsweise der Fahrbahn verläuft.

In der Figur 2 sind hierzu drei unterschiedliche Soll-Park-Bahn 12, 14, 16 dargestellt, wobei die Soll-Park-Bahn 12 zunächst ein geradliniges, schräg zur Parklückenlängsachse verlaufendes Eingangssegment S1 aufweist. An dieses Eingangssegment S1 schließt sich dann tangential das Hauptsegment S2 an. An das Hauptsegment S2 schließt sich dann tangential das geradlinig verlaufende Auslaufsegment S3 an.

Die Soll-Park-Bahn 14 sieht demgegenüber zunächst ein parallel zur Mittellängsachse der Parklücke verlaufendes Eingangssegment S1 vor. Daran schließt sich tangential ein Hauptsegment S2 an, dessen Endpunkt dem Endpunkt des Hauptsegments S2 der Soll-Park-Bahn 12 entspricht. Insofern entspricht dann dem Auslaufsegment S3 der Bahn 14 das Auslaufsegment S3 der Bahn 12.

Bei der Park-Soll-Bahn 16 ist zunächst ein Eingangssegment S1 vorgesehen, das von einer kubischen Bezierkurve b gebildet wird. Der Endpunkt dieser Bezierkurve b bildet dann den Startpunkt des Hauptsegments S2, wobei das Hauptsegment S2 in das Hauptsegment S1 tangential übergeht. An das Hauptsegment S2 schließt sich dann das Auslaufsegment S3, das von der Geraden 1 gebildet wird, an.

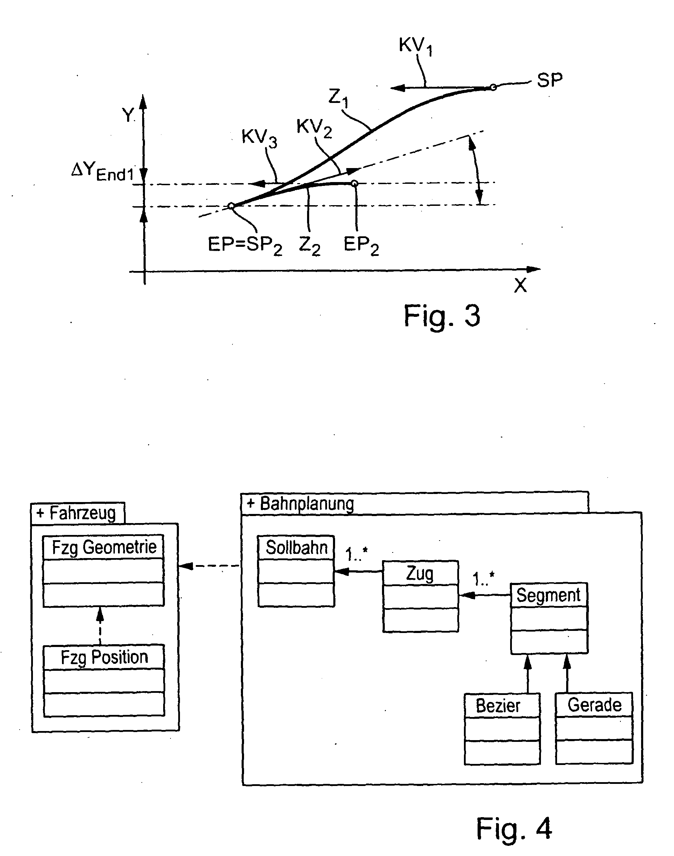

Sollte es nicht möglich sein, in einem Zug, also ohne das Fahrzeug durch Fahrtrichtungswechsel zu korrigieren, in die Parklücke einzuparken, so kann sich an den ersten Einparkzug ein weiterer Einparkzug anschließen. Eine solche Situation ist in Figur 3 dargestellt. Der erste Einparkzug Z1 wird hierbei durch ein von einer Bezierkurve gebildetes Hauptsegment mit dem Startpunkt SP und dem Endpunkt EP gebildet und durch die beiden Vektoren KV1 und KV2 definiert. Der Endpunkt EP bildet dabei den Startpunkt des zweiten Zuges Z2, wobei der zweite Zug Z2 ebenfalls von einer Bezierkurve gebildet wird. Diese Bezierkurve wird definiert durch deren Startpunkt SP2, der dem Endpunkt EP der Kurve Z1 entspricht, dem Endpunkt EP2 und durch die Vektoren KV2 und KV3. Da sich im zweiten Zug Z2 das Fahrzeug in eine andere Richtung wie im ersten Zug Z1 bewegt, ist im gewählten Koordinatensystem der X-Wert des Punktes EP2 größer dem X-Wert von EP. Da eine Korrektur erfolgen soll, ist zudem der Y-Wert des Punktes EP2 größer als der Y-Wert des Punktes EP.

Zur Berechnung der ein oder mehrere Einparkzüge aufweisenden Soll-Park-Bahn kann das in Figur 4 dargestellte Modell Verwendung finden. Ausgehend von der bekannten Größe der Parklücke und der relativen Lage des Fahrzeugs zur Parklücke kann unter Berücksichtigung der Fahrzeuggeometrien, insbesondere der Fahrzeuglänge und der Fahrzeugbreite, die Sollbahn berechnet werden. Die Sollbahn kann sich dabei aus ein oder mehreren Zügen zusammensetzen. Jeder Zug sieht zumindest ein Segment vor, wobei ein Hauptsegment in Form einer Bezierkurve vorgesehen ist. An dieses Hauptsegment kann sich ein Auslaufsegment anschließen beziehungsweise dem Hauptsegment kann ein Eingangssegment vorgelagert sein.

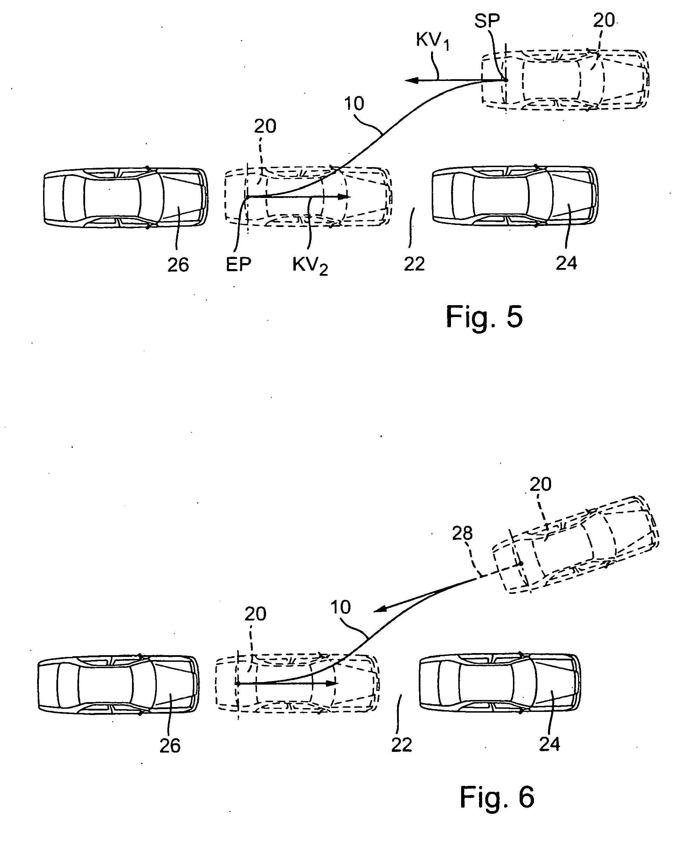

In den Figuren 5 - 8 sind verschiedene konkrete Einparksituationen dargestellt, wobei ein Fahrzeug 20 rückwärtig in eine sich parallel zur Fahrbahn erstreckende Parklücke 22, die von zwei stehenden Fahrzeugen 24 und 26 begrenzt wird, eingeparkt werden soll.

Nachdem das Fahrzeug die Parklücke 22 passiert hat und mittels am Fahrzeug vorgesehenen Sensoren die Parklückengröße bestimmt wurde, befindet das Fahrzeug 20 in der Startposition, aus welcher in die Parklücke 22 eingeparkt werden soll. Bevor das Fahrzeug rückwärts in die Parklücke 22 einparkt, wird die Soll-Park-Bahn unter Verwendung eines von einer Bezierkurve gebildeten Hauptsegments berechnet. Dabei wird die Länge der Parklücke, die Fahrzeuggeometrie sowie der durch den maximalen Lenkeinschlag vorgegebene Bahnradius und eine maximal zulässige Fahrzeugschrägstellung bezüglich der Parklückenlängsachse berücksichtigt.

Bei der in der Figur 5 dargestellten Situation wurde eine Soll-Park-Bahn berechnet, die lediglich aus einem Hauptsegment beziehungsweise einer Bezierkurve besteht. Das Hauptsegment 10 wird dabei durch den Startpunkt SP, den Endpunkt EP und die beiden Kontrollvektoren KV1 und KV2 definiert. Das Einparken erfolgt dabei vorteilhafterweise derart, dass der Mittelpunkt der nicht lenkbaren Hinterachse des Fahrzeugs entlang des in Figur 5 dargestellten Hauptsegments 10 bewegt wird.

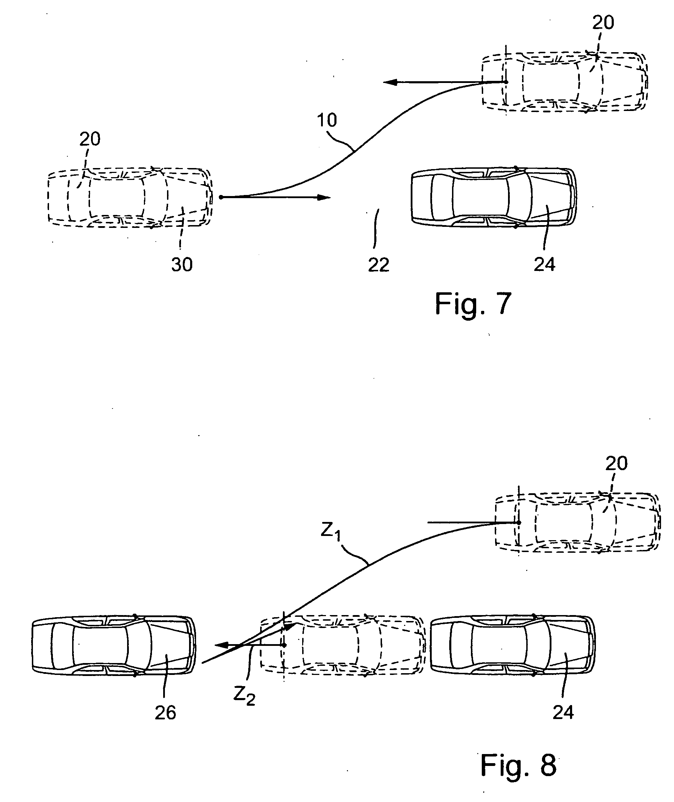

In der Figur 6 befindet sich das Fahrzeug in einer anderen Ausgangsposition. Dem Hauptsegment ist deshalb ein lineares Eingangssegment 28 vorgeschaltet, welches tangential in das Hauptsegment 10 übergeht. Bei der in der Figur 7 dargestellten Ausgangslage ist die Parklücke 22 vergleichsweise lang. Deshalb wird dem Hauptsegment 10 ein lineares Auslaufsegment 30 nachgeschaltet, durch welches sich das Fahrzeug 20 in gleicher Fahrtrichtung noch parallel zur Längsachse der Parklücke 22 geführt wird.

Bei der Situation gemäß Figur 8 ist ein Einparken mit einem Einparkzug nicht möglich. An den ersten Einparkzug Z1 schließt sich ein zweiter Einparkzug Z2 an, wobei Einzelheiten zu den Einparkzügen Z1 und Z2 bereits zur Figur 3 beschrieben wurden.

**Patentansprüche**

1. Verfahren zum rückwärtigen Einparken eines Fahrzeugs (20) in eine sich parallel zur Fahrbahn erstreckende Parklücke (22) entlang einer Soll-Park-Bahn, wobei die Soll-Park-Bahn wenigstens ein eine Kurve beschreibendes Hauptsegment (10) aufweist, **dadurch gekennzeichnet, dass** das Hauptsegment (10) von einer durch einen Startpunkt (SP), einen Endpunkt (EP) und zwei Kontrollpunkten (KP1, KP2) oder, anstelle der beiden Kontrollpunkte (KP1, KP2) von zwei Kontrollvektoren (KV1, KV2) definierten kubischen Bezierkurve gebildet wird, wobei die Kontrollpunkte (KP1, KP2) oder -vektoren (KV1, KV2) derart gewählt sind, dass eine Kollision des Fahrzeugs (20) mit die Parklücke begrenzenden Hindernissen (24, 26) nicht stattfindet und ein durch einen maximalen Lenkeinschlag vorgegebener Bahnradius nicht unterschritten und/oder eine maximal zulässige Fahrzeugschrägstellung bezüglich der Parklückenlängsachse nicht überschritten wird.

2. Verfahren nach Anspruch 1, **dadurch gekennzeichnet, dass** sich an das Hauptsegment (10) ein geradliniges Auslaufsegment (S3) tangential anschließt.

3. Verfahren nach Anspruch 1 oder 2, **dadurch gekennzeichnet, dass** zur Erreichung des Startpunkts (SP) des Hauptsegments (10) ein dem Hauptsegment (10) vorgelagertes Eingangssegment (S1) vorgesehen ist, an das sich das Hauptsegment (10) tangential anschließt.

4. Verfahren nach Anspruch 3, **dadurch gekennzeichnet, dass** das Eingangssegment (S1) einen geradlinigen Verlauf (g) aufweist oder von einer durch einen Startpunkt, einen Endpunkt, der identisch zu dem Startpunkt (SP) des Hauptsegments ist, und zwei Kontrollpunkten definierten kubischen Bezierkurve (b) gebildet wird.

5. Verfahren nach einem der vorhergehenden Ansprüche, **dadurch gekennzeichnet, dass** das Hauptsegment (10) und/oder das Eingangssegment (S1), falls dieses nach Anspruch 4 ebenfalls von einer Bezierkurve gebildet wird, in jeweils *n* Untersegmente aufgeteilt wird, wobei das Hauptsegment (10) bildende Kurvenstützpunkte wie folgt berechnet werden:

$$x_i = x_{start}\left(1-\frac{i}{N}\right)^3 + 3x_{kp1}\frac{i}{N}\left(1-\frac{i}{N}\right)^2 + 3x_{kp2}\left(\frac{i}{N}\right)^2\left(1-\frac{i}{N}\right) + x_{end}\left(\frac{i}{N}\right)^3 \qquad (1)$$

$$y_i = y_{start}\left(1-\frac{i}{N}\right)^3 + 3y_{kp1}\frac{i}{N}\left(1-\frac{i}{N}\right)^2 + 3y_{kp2}\left(\frac{i}{N}\right)^2\left(1-\frac{i}{N}\right) + y_{end}\left(\frac{i}{N}\right)^3 \qquad (2),$$

mit:

$x_{start},y_{start}$: x- und y-Wert des Startpunkts,
$X_{kp1},y_{kp1}$: x- und y-Wert des ersten Kontrollpunkts,
$x_{kp2},y_{kp2}$: x- und y-Wert des zweiten Kontrollpunkts,
$x_{end},y_{end}$: x- und y-Wert des Endpunkts,
$n$: Anzahl der Untersegmente,
$i$: Nummer des Stützpunktes, und
$N=(n+1)$: Anzahl der Kurvenstützpunkte wobei für $N$ insbesondere ein Wert von 100 bis 1000 vorgebeben werden kann. (wodurch Zwischen den Stützpunkten linear interpoliert wird).

6. Verfahren nach einem der vorhergehenden Ansprüche, **dadurch gekennzeichnet, dass** das Hauptsegment (10) Bestandteil eines ersten Einparkzuges (Z1) ist und dass sich an den ersten Einparkzug (Z1) wenigstens ein weiterer, in entgegengesetzter Fahrtrichtung des Fahrzeug (20) gerichteter Einparkzug (72) mit einem eigenen von einer kubischen Bezierkurve gebildet Hauptsegment anschließt, wobei der Endpunkt (EP) des ersten Einparkzuges (Z1) den Startpunkt (SP2) des zweiten Einparkzuges (Z2) bildet.

7. Einparkhilfesystem zum rückwärtigen Einparken eines Fahrzeugs in eine sich parallel zur Fahrbahn erstreckende Parklücke (22) entlang einer Soll-Park-Bahn, mit Sensoren zum Erfassen der Länge der Parklücke (22) und mit einer Auswerteeinheit, die die Soll-Park-Bahn gemäß einem Verfahren nach wenigstens einem der vorhergehenden Ansprüche berechnet.

**Claims**

1. Method for reverse-parking of a vehicle (20) into a parking space (22), extending parallel to the roadway, along a desired parking path, the desired parking path having at least one main segment (10) describing a curve, **characterized in that** the main segment (10) is formed by a cubic Bezier curve defined by a start point (SP), an end point (EP) and two control points (KP1, KP2) or, instead of the two control points (KP1, KP2), by two control vectors (KV1, KV2), the control points (KP1, KP2) or control vectors (KV1, KV2) being selected in such a way that a collision of the vehicle (20) with the obstacles (24, 26) delimiting the parking space does not take place, and a path radius prescribed by a maximum steering lock is not undershot, and/or a maximum permissible vehicle inclination with reference to the parking space longitudinal axis is not overshot.

2. Method according to Claim 1, **characterized in that** a rectilinear coasting segment (S3) tangentially follows the main segment (10).

3. Method according to Claim 1 or 2, **characterized in that** for the purpose of reaching the start point (SP) of the main segment (10) there is provided ahead of the main segment (10) an entry segment (S1) which the main segment (10) tangentially follows.

4. Method according to Claim 3, **characterized in that** the entry segment (S1) has a rectilinear course (g) or is formed by a cubic Bezier curve (b) defined by a start point, an end point, which is identical to the start point (SP) of the main segment, and two control points.

5. Method according to one of the preceding claims, **characterized in that** the main segment (10) and/or the entry segment (S1), should the latter likewise be formed by a Bezier curve in accordance with Claim 4, are/is respectively divided into $n$ subsegments, the curve interpolation points forming the main segment (10) being calculated as follows:

$$x_i = x_{start}\left(1-\frac{i}{N}\right)^3 + 3x_{kp1}\frac{i}{N}\left(1-\frac{i}{N}\right)^2 + 3x_{kp2}\left(\frac{i}{N}\right)^2\left(1-\frac{i}{N}\right) + x_{end}\left(\frac{i}{N}\right)^3 \quad (1)$$

$$y_i = y_{start}\left(1-\frac{i}{N}\right)^3 + 3y_{kp1}\frac{i}{N}\left(1-\frac{i}{N}\right)^2 + 3y_{kp2}\left(\frac{i}{N}\right)^2\left(1-\frac{i}{N}\right) + y_{end}\left(\frac{i}{N}\right)^3 \quad (2),$$

where:

$x_{start}, y_{start}$ are the x- and y-values of the start point,
$x_{kp1}, y_{kp1}$ are the x- and y-values of the first control point,
$x_{kp2}, y_{kp2}$ are the x- and y-values of the second control point,
$x_{end}, y_{end}$ are the x- and y-values of the end point,
$n$ is the number of the subsegments,
$i$ is the number of the interpolation point, and
$N = (n + 1)$ is the number of the curve interpolation points, it being possible, in particular, to prescribe a value of 100 to 1000 for $N$ (result being linear interpolation between the interpolation points).

6. Method according to one of the preceding claims, **characterized in that** the main segment (10) is a constituent of a first parking move (Z1), and **in that** the first parking move (Z1) is followed by at least one further parking move (Z2) directed in the opposite travelling direction of the vehicle (20) and having its own main segment formed by a cubic Bezier curve, the end point (EP) of the first parking move (Z1) forming the start point (SP2) of the second parking move (Z2).

7. Parking assistance system for reverse-parking a vehicle into a parking space (22), extending parallel to the roadway, along a desired parking path, having sensors for detecting the length of the parking space (22) and having an evaluation unit which calculates the desired parking path in accordance with a method according to at least one of the preceding claims.

## Revendications

1. Procédé pour stationner un véhicule (20) en marche arrière le long d'un parcours de consigne de stationnement dans un emplacement de stationnement (22) qui s'étend parallèlement à la chaussée, le parcours de consigne de stationnement présentant au moins un segment principal (10) qui décrit une courbe,
   **caractérisé en ce que**
   le segment principal (10) est formé par une courbe cubique de Bezier définie par un point initial (SP), un point final (EP) et deux points de contrôle (KP1, KP2) ou, au lieu des deux points de contrôle (KP1, KP2), par deux vecteurs de contrôle (KV1, KV2),
   **en ce que** les points de contrôle (KP1, KP2) ou vecteurs de contrôle (KV1, KV2) sont sélectionnés de manière à ce que le véhicule (20) n'entre pas en collision avec les obstacles (24, 26) qui délimitent l'emplacement de stationnement, à ce que le rayon du parcours ne soit pas inférieur à un rayon de parcours prédéterminé par une action maximale sur le volant et/ou à ce que la position oblique du véhicule par rapport à l'axe longitudinal de l'emplacement de parcours ne soit pas supérieure à une position oblique maximale admissible du véhicule.

2. Procédé selon la revendication 1, **caractérisé en ce qu'**un segment rectiligne de sortie (S3) se raccorde tangentiellement au segment principal (10).

3. Procédé selon les revendications 1 ou 2, **caractérisé en ce qu'**un segment d'entrée (S1) situé en amont du segment principal (10) et auquel le segment principal (10) se raccorde tangentiellement est prévu pour atteindre le point initial (SP) du segment principal (10).

**4.** Procédé selon la revendication 3, **caractérisé en ce que** le segment d'entrée (S1) présente une évolution rectiligne (g) ou est formé par une courbe cubique de Bezier (b) définie par un point initial, un point final identique au point initial (SP) du segment principal et deux points de contrôle.

**5.** Procédé selon l'une des revendications précédentes, **caractérisé en ce que** le segment principal (10) et/ou le segment d'entrée (S1) au cas où ce dernier est également formé selon la revendication 4 par une courbe de Bezier sont divisés chacun en n sous-segments, les points d'appui de la courbe qui définissent le segment principal (10) étant calculés de la façon suivante :

$$x_i = x_{start}\left(1-\frac{i}{N}\right)^3 + 3x_{kp1}\frac{i}{N}\left(1-\frac{i}{N}\right)^2 + 3x_{kp2}\left(\frac{i}{N}\right)^2\left(1-\frac{i}{N}\right) + x_{end}\left(\frac{i}{N}\right)^3 \quad (1)$$

$$y_i = y_{start}\left(1-\frac{i}{N}\right)^3 + 3y_{kp1}\frac{i}{N}\left(1-\frac{i}{N}\right)^2 + 3y_{kp2}\left(\frac{i}{N}\right)^2\left(1-\frac{i}{N}\right) + y_{end}\left(\frac{i}{N}\right)^3 \quad (2),$$

dans lesquelles

$x_{start}$, $y_{start}$ représentent les valeurs x et y du point initial,
$x_{kp1}$, $y_{xp1}$ représentent les valeurs x et y du premier point de contrôle,
$x_{kp2}$, $y_{kp2}$ représentent les valeurs x et y du deuxième point de contrôle,
$x_{end}$, $y_{end}$ représentent les valeurs x et y du point final,
$n$ représente le nombre de sous-segments,
$i$ représente le numéro du point d'appui et
$N=(n+1)$ représente le nombre des points d'appui de la courbe,

tandis que pour $N$, on peut prédéterminer une valeur comprise en particulier entre 100 et 1 000 (avec interpolation linéaire entre les points d'appui).

**6.** Procédé selon l'une des revendications précédentes, **caractérisé en ce que** le segment principal (10) fait partie d'un premier tronçon de parcours de stationnement (Z1) et **en ce qu'**au premier tronçon de parcours de stationnement (Z1) se raccorde au moins un autre tronçon de parcours de stationnement (Z2) orienté dans la direction opposée à la direction d'avancement du véhicule (20) et présentant un segment principal propre formé par une courbe cubique de Bezier, le point final (EP) du premier tronçon de parcours de stationnement (Z1) formant le point initial (SP2) du deuxième tronçon de parcours de stationnement (Z2).

**7.** Système d'assistance au stationnement, pour stationner un véhicule automobile en marche arrière le long d'un parcours de consigne de stationnement dans un emplacement de stationnement (22) qui s'étend parallèlement à la chaussée, doté de détecteurs qui détectent la longueur de l'emplacement de stationnement (22) et d'une unité d'évaluation qui calcule le parcours de consigne de stationnement à l'aide d'un procédé selon au moins l'une des revendications précédentes.

Fig. 1

Fig. 2

Fig. 3

Fig. 4

Fig. 5

Fig. 6

20

20

10

30

22

24

## Fig. 7

20

$Z_1$

$Z_2$

26

24

## Fig. 8

**EP 2 091 803 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1170171 A2
- WO 2004050458 A1